# EUROPEAN PATENT SPECIFICATION

(11) **EP 3 301 897 B1**
(45) Date of publication and mention of the grant of the patent: **15.05.2019**
(21) Application number: 17193431.8
(22) Date of filing: 27.09.2017
(51) Int. Cl.: H04M 3/56, H04L 12/18, H04N 7/15

(54) **TELECONFERENCING WITH NON-VERBAL FEEDBACK FROM PARTICIPANTS**
TELEKONFERENZEN MIT NICHTVERBALEM FEEDBACK VON TEILNEHMERN
TÉLÉCONFÉRENCE COMPORTANT UNE RÉTROACTION NON VERBALE DE PARTICIPANTS

(30) Priority: 29.09.2016 US 201615280390
(43) Date of publication of application: 04.04.2018
(73) Proprietor: LENOVO ENTERPRISE SOLUTIONS (SINGAPORE) PTE. LTD., Singapore 556741 (SG)
(72) Inventor: PURSER, Zachary Robert, Raleigh, NC 27613 (US); CLAPP, Beverly Denise, Durham, NC 27703 (US); ENGLER, Ray Robert, Cary, NC 27513 (US); Brown, Tristian T., Raleigh, NC 27612 (US)
(74) Representative: Leffers, Thomas

(56) References cited:
- JP-A- 2005 269 207
- US-A1- 2013 019 187

## Description

### BACKGROUND

### Field of the Invention

The present invention relates to systems and methods for holding a teleconference including participant feedback.

### Background of the Related Art

A teleconference is the live exchange of information among multiple participants at separate locations that are linked by a telecommunications system. The teleconference may support the exchange of audio, video and data, depending upon the capabilities of the system and the demands of the teleconference. Furthermore, the audio, video or data may be fully or partially controlled by a teleconference administrator or host, with or without any feedback from the other participants. While other systems exist, a teleconference may be implemented by running a teleconferencing application on each participant's computer that has a connection to the Internet.

For a small number of participants, it is possible to exchange a full audio and video signal from each participant to each other participant. However, as the number of participants increases there is a substantial increase in the amount of bandwidth consumed. Such an exchange of full audio and video signals becomes unproductive for large groups of participants since many of the participants may not have much to contribute. Furthermore, if the teleconference involves participants from multiple organizations, each video stream may accidentally expose confidential information in the background of the video image. JP 2005 269207 describes a method for notifying a communicating party in a terminal to terminal communication of a speaker's feelings, whereby a motion of a speaker's head and the position of the speaker's eyes' visual axis are measured. US 2013/019187 A1 describes a system and a method for visualizing emotions and mood in a collaborative social networking environment in which an interaction of a participant with one or more applications are monitored.

### BRIEF SUMMARY

One embodiment of the present invention provides a method comprising displaying teleconference images on display screens of each of a plurality of participant computers for viewing by participants in a teleconference. The method further comprises detecting, for each of the plurality of participant computers, movement of a headset that is in direct communication with the participant computer, and assigning, for each of the plurality of participant computers, a sentiment to the participant using the participant computer as a function of the detected headset movement. Still further, the method comprises displaying the sentiment assigned to at least one of the participants along with the teleconference images on at least one of the participant computers The method also comprises establishing, for each of the plurality of participant computers, a network connection with a teleconferencing server; and the teleconferencing server sending the teleconference images to each of the plurality of participant computers, characterized in that the sentiment is assigned by a component of the headset responsive to the movement of the headset.

Another embodiment of the present invention provides a computer program product comprising a non-transitory computer readable storage medium having program instructions embodied therewith, wherein the program instructions are executable by a processor to cause the processor to perform a method. The method comprises establishing, by a teleconferencing server, a network connection with each of a plurality of participant computers, and sending teleconference images to each of the plurality of participant computers for displaying teleconference images on display screens of each of a plurality of participant computers. The method further comprises receiving input identifying movement of a plurality of headsets, wherein each headset is in direct communication with one of the plurality of participant computers. Still further, the method comprises assigning, for each of the plurality of participant computers, a sentiment to the participant using the participant computer as a function of the headset movement received from each of the plurality of participant computers, and sending the sentiment assigned to at least one of the participants along with the teleconference images to at least one of the participant computers for display along with the teleconference images. Therein, the sentiment is assigned to at least one of the participants by a component of the headset that is in a direct communication with the at least one participant's computer responsive to the movement of the headset that is in a direct communication with the at least one participant's computer.

### BRIEF DESCRIPTION OF THE SEVERAL VIEWS OF THE DRAWINGS

FIG. **1** is a system diagram including a number of participant devices in communication with a teleconference service provider over a network.
FIG. **2** is a schematic diagram of a participant computer that supports communication with the network and communication with a headset.
FIGS. **3A-3C** are diagrams illustrating three basic types of motion that may be detected by an accelerometer in a headset.
FIG. **4** is a block diagram of components within a headset.
FIG. **5** is a diagram of a computer that may implement the teleconference service provider.
FIG. **6** is a flowchart of a method according to one embodiment of the present invention.
FIG. **7** is an illustration of a display screen including a first area for teleconference video or graphics and a second area for showing participant feedback.

### DETAILED DESCRIPTION

One embodiment of the present invention provides a method comprising displaying teleconference images on display screens of each of a plurality of participant computers for viewing by participants in a teleconference. The method further comprises detecting, for each of the plurality of participant computers, movement of a headset that is in direct communication with the participant computer, and assigning, for each of the plurality of participant computers, a sentiment to the participant using the participant computer as a function of the detected headset movement. Still further, the method comprises displaying the sentiment assigned to at least one of the participants along with the teleconference images on at least one of the participant computers.

The teleconference images may be graphics, live video, and combinations thereof. For example, graphics may be the output of a spreadsheet or presentation software. Live video may be produced from a computer camera on one or more participant's computer. Sentiment may be displayed along with the teleconference images in any manner, such as in a sidebar or separate window. Furthermore, the sentiment assigned to each participant may be displayed in association with the participants name or other identifier. As one non-limiting example, sentiment may be indicated graphically by using a first color or icon to indicate a positive sentiment and a second color or icon to indicate a negative sentiment. For example, an avatar representing each participant may be shaded or colored to indicate a sentiment, perhaps using green to indicate agreement, red to indicate disagreement, and yellow to indicate confusion or a neutral sentiment.

Embodiments of the method may determine a collective sentiment of all participants as a function of the sentiment received from each participant. Such a collective sentiment may be displayed along with the teleconference images on at least one of the participant computers. The collective sentiment may represent the extent of positive or negative sentiment of the group of participants at any point in the teleconference. The sentiment of an individual participant or the group of participants at any point in time may be associated with the content of the teleconference images being displayed at that time. For example, if the participants are discussing a number of proposals, the current participant or group sentiment may be attributed to proposal that is currently being discussed or displayed in the teleconference images. This information may be useful to any of the participants, and especially to the presenters, administrator or host of the teleconference.

Embodiments of the present invention may implemented using a teleconferencing server that generally coordinates the teleconference and may perform one or more aspects of the present methods. In one example, the method may establish, for each of the plurality of participant computers, a network connection with a teleconferencing server, wherein the teleconferencing server sends the teleconference images to each of the plurality of participant computers.

In a preferred embodiment, each participant will wear a headset during the teleconference. Accordingly, the headset directly communicates with a participant's computer via a wired or wireless connection, such as Bluetooth™. While the headset will preferably include the common features of a microphone for providing verbal input and speakers for outputting teleconference audio, headset embodiments of the present invention may further include an accelerometer that is capable of detecting movement of the headset. The accelerometer preferably measures acceleration in multiple directions. For convenience of design, the accelerometer may measure acceleration in three directions, such as along the XYZ axis of a Cartesian coordinate system. Accordingly, the output of the accelerometer will provide an indication of the movement of the headset. Most preferably, the output of the accelerometer identifies movement of the headset in a manner that can distinguish between head nodding of the participant, side-to-side head shaking of the participant, and a sideway head tilting of the participant. Therefore, embodiments of the method may assign a positive sentiment to the participant in response to detecting movement of the headset that is consistent with head nodding of the participant, assign a negative sentiment to the participant in response to detecting movement of the headset that is consistent with side-to-side head shaking of the participant, and/or assign a confusion sentiment to the participant in response to detecting movement of the headset that is consistent with a sideways head tilting of the participant. It should be recognized that other movements of the headset, either alone or in combination with movements of other connected devices, may be associated with these or other sentiments.

The sentiment that is assigned to a participant responsive to movement of the headset may be assigned by a component of the headset, the participant's computer, or a teleconferencing server. In embodiments where the sentiment is assigned by a component of the headset, the method may further comprise transmitting the assigned sentiment from the headset to the participant computer, and transmitting the assigned sentiment from the participant computer to a teleconferencing server. In embodiments where the sentiment is assigned to a participant by the participant computer, the method may include transmitting the detected movement of the headset from the headset to the participant computer, and transmitting the assigned sentiment from the participant computer to the teleconferencing server. In still further embodiments where the sentiment is assigned to a participant by the teleconferencing server, the method may include transmitting the detected movement of the headset from the headset to the participant computer and from the participant computer to a teleconferencing server, wherein.

Another embodiment of the present invention provides a computer program product comprising a non-transitory computer readable storage medium having program instructions embodied therewith, wherein the program instructions are executable by a processor to cause the processor to perform a method. The method comprises establishing, by a teleconferencing server, a network connection with each of a plurality of participant computers, and sending teleconference images to each of the plurality of participant computers for displaying teleconference images on display screens of each of a plurality of participant computers. The method further comprises receiving input identifying movement of a plurality of headsets, wherein each headset is in direct communication with one of the plurality of participant computers. Still further, the method comprises assigning, for each of the plurality of participant computers, a sentiment to the participant using the participant computer as a function of the headset movement received from each of the plurality of participant computers, and sending the sentiment assigned to at least one of the participants along with the teleconference images to at least one of the participant computers for display along with the teleconference images.

The foregoing computer program products may further include program instructions for implementing or initiating any one or more aspects of the methods described herein. Accordingly, a separate description of the methods will not be duplicated in the context of a computer program product.

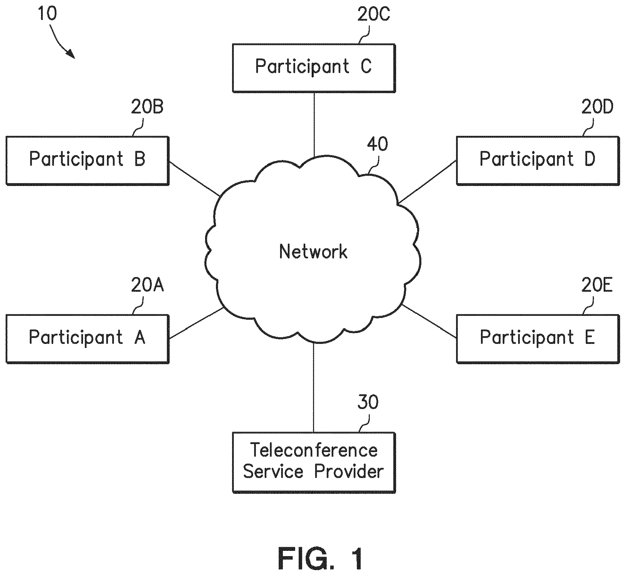

FIG. **1** is a diagram of a system **10** including a number of participant devices **20A-E** (Participants A-E; collectively referred to as participant devices **20**) in communication with a teleconference service provider **30** over a network **40**. After each of the participant devices **20** have established a network connection with the teleconferencing server **30**, the teleconferencing server **30** may send teleconference images to each of the plurality of participant computers **20** to be displayed for viewing by a participant. Furthermore, the teleconferencing server **30** may coordinate the teleconference and may perform one or more aspects of the present methods.

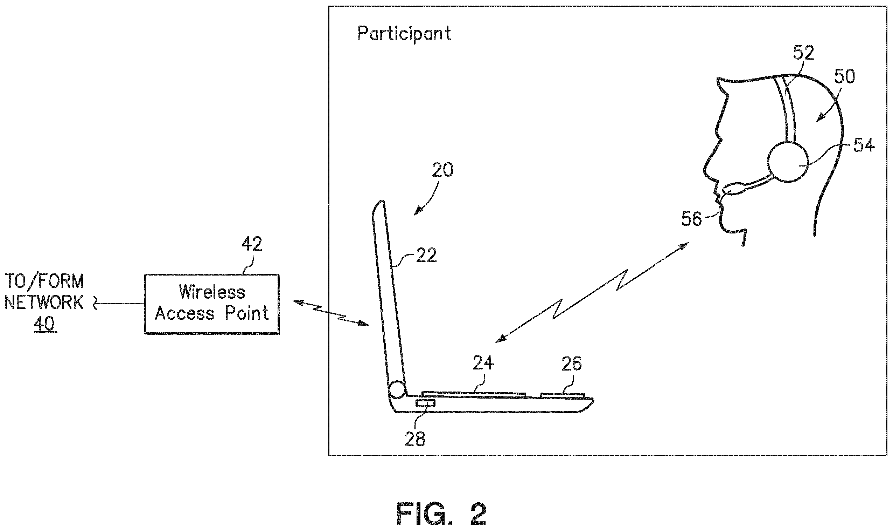

FIG. **2** is a schematic diagram of a participant computer (device) **20** that supports communication with the network **40** and communication with a headset **50**. While the computer **20** is illustrated as being a laptop, the participant computer may have any form factor, such as a desktop computer, tablet computer or smartphone. As shown, the computer **20** may connect with the network **40** via a wireless access point **42**. The computer **20** may also communicate with the headset **50**, perhaps via a wireless communication protocol such as Bluetooth™. The process of connecting or bonding a Bluetooth™ device to the computer may referred to as pairing.

A typical participant computer **20** will include a display screen **22**, keyboard **24** and a pointing device, such as the trackpad **26**. For wireless communication with the headset **50**, the computer **20** may also include either an internal transceiver microchip or an external dongle **28**.

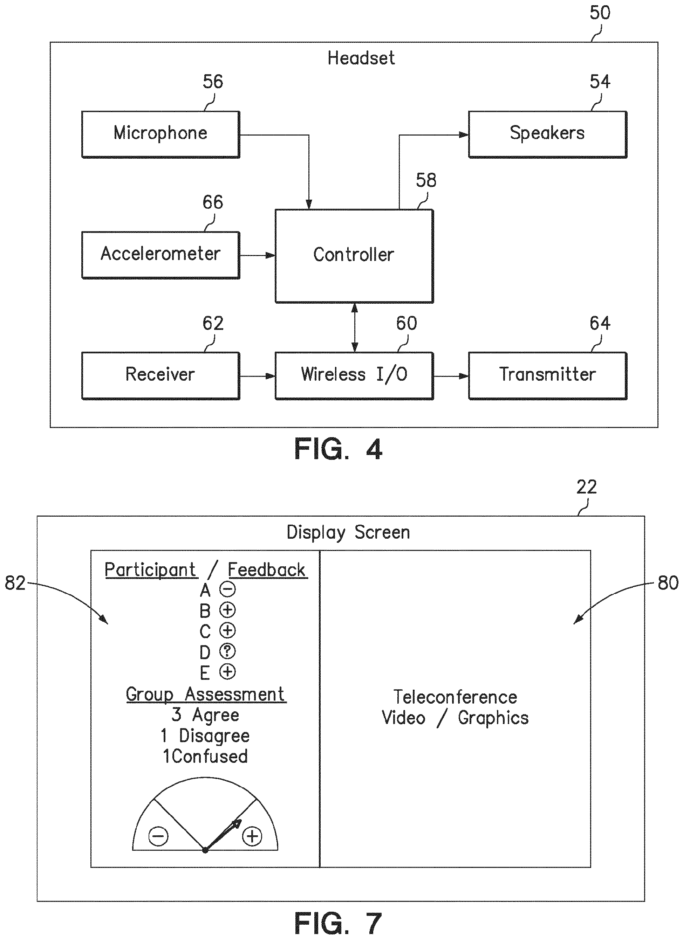

The headset **50** may include an optional headband **52**, a speaker **54** and a microphone **56**. However, the form factor of the headset may differ in various manners. For example, the headband may be replaced with an over-the-ear strap, the speaker may be replaced with an earbud or in-ear monitor, and the microphone may be housed nearer to the participant's ear. Other electronics, such as a controller and an accelerometer (See FIG. **4**), may be included in a housing, such as the housing that is enclosing the speaker **54**.

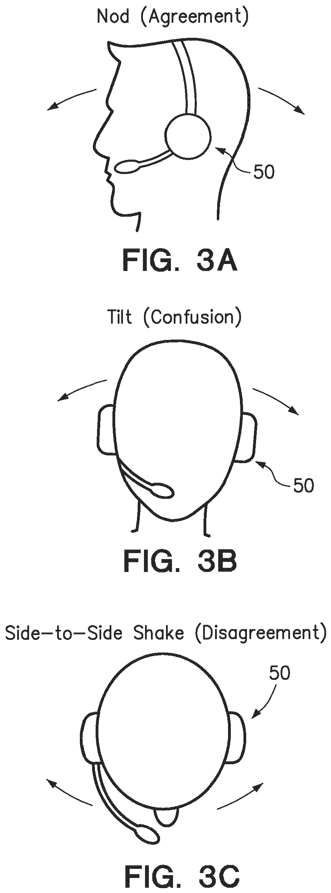

FIGS. **3A-3C** are diagrams illustrating three basic types of motion that may be detected by an accelerometer in the headset **50**. FIG. **3A** is a side view of the participant wearing the headset **50** and nodding his head back and forth (see the two motion arrows). Embodiments of the present invention may detect this nodding movement of the headset accelerometer and assign the sentiment of agreement to this movement. FIG. **3B** is a front view of the participant wearing the headset **50** and tilting his head in one direction or the other (see the left and right side directional arrows). Embodiments of the present invention may detect this sideways tilting movement of the headset accelerometer and assign the sentiment of confusion or uncertainty to this movement. FIG. **3C** is a top view of the participant wearing the headset **50** and shaking his head side-to-side (see the two motion arrows). Embodiments of the present invention may detect this shaking movement of the headset accelerometer and assign the sentiment of disagreement to this movement.

FIG. **4** is a block diagram of components within a headset **50**. The headset **50** includes the speaker(s) **54** and the microphone **56** as shown in FIG. **2**. However, the headset **50** further includes a controller **58** that receives audio input from the microphone **56** and provides audio output to the speaker(s) **54**. The controller **58** is in communication with a wireless input output component **60** that receives an input signal from a wireless receiver **62** and sends an output signal to a wireless transmitter **64**. Optionally, the components **60**, **62**, **64** may be referred to collectively as a wireless transceiver, such as a Bluetooth™ transceiver. The headset **50** further includes an accelerometer **66** that provides a signal to the controller **58** indicating any movement of the headset that is detected by the accelerometer **66**. The accelerometer may be any type of accelerometer capable of detected various one or more movements. Most preferably, the accelerometer will produce a signal that will distinguish between certain movements or gestures, such as nodding in agreement (see FIG. **3A**), shaking in disagreement (see FIG. **3C**), or tilting in confusion (see FIG. **3B**). Optionally, the accelerometer may produce a signal that will distinguish other predetermined gestures.

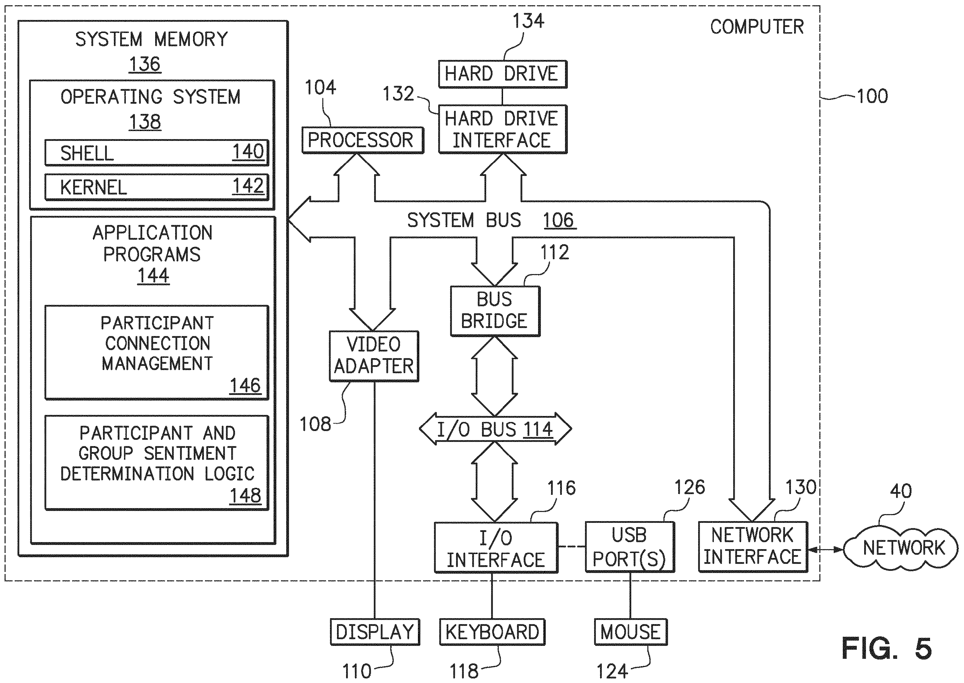

FIG. **5** is a diagram of a computer **100** that may implement a participant computer **20** and/or the teleconference service provider **30** of FIG. **1**, according to one embodiment of the present invention. The computer **100** includes a processor unit **104** that is coupled to a system bus **106**. The processor unit **104** may utilize one or more processors, each of which has one or more processor cores. A video adapter **108**, which drives/supports a display **110**, is also coupled to system bus **106**. The system bus **106** is coupled via a bus bridge **112** to an input/output (I/O) bus **114**. An I/O interface **116** is coupled to the I/O bus **114**. The I/O interface **116** affords communication with various I/O devices, including a keyboard **118**, and a USB mouse **124** via USB port(s) **126**. As depicted, the computer **100** is able to communicate with other network devices over the network **40** using a network adapter or network interface controller **130**.

A hard drive interface **132** is also coupled to the system bus **106**. The hard drive interface **132** interfaces with a hard drive **134**. In a preferred embodiment, the hard drive **134** communicates with system memory **136**, which is also coupled to the system bus **106**. System memory is defined as a lowest level of volatile memory in the computer **100**. This volatile memory includes additional higher levels of volatile memory (not shown), including, but not limited to, cache memory, registers and buffers. Data that populates the system memory **136** includes the operating system (OS) **138** and application programs **144**.

The operating system **138** includes a shell **140** for providing transparent user access to resources such as application programs **144**. Generally, the shell **140** is a program that provides an interpreter and an interface between the user and the operating system. More specifically, the shell **140** executes commands that are entered into a command line user interface or from a file. Thus, the shell **140**, also called a command processor, is generally the highest level of the operating system software hierarchy and serves as a command interpreter. The shell provides a system prompt, interprets commands entered by keyboard, mouse, or other user input media, and sends the interpreted command(s) to the appropriate lower levels of the operating system (e.g., a kernel **142**) for processing. Note that while the shell **140** may be a text-based, line-oriented user interface, the present invention may support other user interface modes, such as graphical, voice, gestural, etc.

As depicted, the operating system **138** also includes the kernel **142**, which includes lower levels of functionality for the operating system **138**, including providing essential services required by other parts of the operating system **138** and application programs **144**. Such essential services may include memory management, process and task management, disk management, and mouse and keyboard management.

As shown, the computer **100** includes application programs **144** in the system memory of the computer **100**, including, without limitation, participant connection management logic **146** and participant and group sentiment determination logic **148**. The participant connection management logic **146** may handle the network connections and registration of participants and their computers in order to support the establishment of a teleconference. The participant and group sentiment determination logic **148** may handle the determination of participant sentiment (if not done by the headset or participant computer), the calculation of group sentiment, and the generation of output for displaying the sentiment in various optional manners.

The hardware elements depicted in the computer **100** are not intended to be exhaustive, but rather are representative. For instance, the computer **100** may include alternate memory storage devices such as magnetic cassettes, digital versatile disks (DVDs), Bernoulli cartridges, and the like. These and other variations are intended to be within the scope of the present invention.

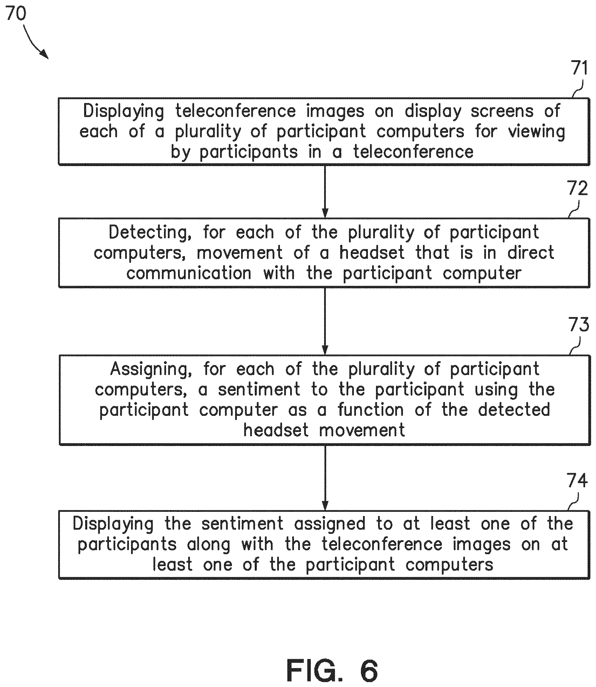

FIG. **6** is a flowchart of a method **70** according to one embodiment of the present invention. Step **71** of the method includes displaying teleconference images on display screens of each of a plurality of participant computers for viewing by participants in a teleconference. Step **72** of the method includes detecting, for each of the plurality of participant computers, movement of a headset that is in direct communication with the participant computer. Step **73** of the method includes assigning, for each of the plurality of participant computers, a sentiment to the participant using the participant computer as a function of the detected headset movement. Step **74** of the method includes displaying the sentiment assigned to at least one of the participants along with the teleconference images on at least one of the participant computers.

FIG. **7** is an illustration of a display screen **22** of a participant computer. The display screen **22** includes a first area **80** for teleconference video or graphics and a second area (left sidebar) **82** for showing participant feedback. As shown, the second area **82** includes the "Participant/Feedback" information that identifies each of the participants (Participants A-E) and positions a sentiment icon (i.e., "(+)" for agreement, "(-)" for disagreement, and "(?)" for confusion) next to the identifier for each participant. The second area **82** further includes the "Group Assessment" information, such as a tabulation of participant sentiments (i.e., 3 Agree, 1 Disagrees and 1 is Confused) and a graphic indication of a collective sentiment for the group. In this non-limiting illustration, the graphic is a meter with a pointer that pivots toward the left as the group has more collective disagreement with the current content of the teleconference video or graphic and pivots toward the right as the group has more collective agreement with the current content of the teleconference video or graphic. Other types and styles of graphics may be used to indicate a collective sentiment.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable storage medium(s) may be utilized. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device. Furthermore, any program instruction or code that is embodied on such computer readable storage medium (including forms referred to as volatile memory) is, for the avoidance of doubt, considered "non-transitory".

Program code embodied on a computer readable storage medium may be transmitted using any appropriate medium, including but not limited to wireless, wireline, optical fiber cable, RF, etc., or any suitable combination of the foregoing. Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention may be described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, and/or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored as non-transitory program instructions in a computer readable storage medium that can direct a computer, other programmable data processing apparatus, or other devices to function in a particular manner, such that the program instructions stored in the computer readable storage medium produce an article of manufacture including non-transitory program instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, components and/or groups, but do not preclude the presence or addition of one or more other features, integers, steps, operations, elements, components, and/or groups thereof. The terms "preferably," "preferred," "prefer," "optionally," "may," and similar terms are used to indicate that an item, condition or step being referred to is an optional (not required) feature of the invention.

The description of the present invention has been presented for purposes of illustration and description, but it is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated. The scope of protection is conferred by the appended claims.

## Claims

1. A method, comprising:
Displaying (71) teleconference images on display screens of each of a plurality of participant computers (20A, 20B, 20C, 20D, 20E) for viewing by participants in a teleconference;
Detecting (72), for each of the plurality of participant computers, movement of a headset (50) that is in direct communication with the participant computer;
Assigning (73), for each of the plurality of participant computers, a sentiment to the participant using the participant computer as a function of the detected headset movement; and
displaying (74) the sentiment assigned to at least one of the participants along with the teleconference images on at least one of the participant computers;
establishing, for each of the plurality of participant computers, a network connection with a teleconferencing server (30); and
the teleconferencing server sending the teleconference images to each of the plurality of participant computers, **characterized in that** the sentiment is assigned by a component of the headset responsive to the movement of the headset.

2. The method of claim 1, wherein the teleconference images are selected from graphics and live video.

3. The method of claim 1, wherein movement of the headset is detected by an accelerometer secured to the headset.

4. The method of claim 3, wherein the accelerometer measures acceleration in three dimensions.

5. The method of claim 3, wherein the accelerometer measures acceleration in multiple directions.

6. The method of claim 5, further comprising:
assigning a positive sentiment to the participant in response to detecting movement of the headset that is consistent with head nodding of the participant; and
assigning a negative sentiment to the participant in response to detecting movement of the headset that is consistent with side-to-side head shaking of the participant.

7. The method of claim 6, further comprising:
assigning a confusion sentiment to the participant in response to detecting movement of the headset that is consistent with a sideways head tilting of the participant.

8. The method of claim 1, further comprising:
determining a collective sentiment of all participants as a function of the sentiment received from each participant; and
displaying the collective sentiment along with the teleconference images on at least one of the participant computers.

9. The method of claim 1, further comprising:
transmitting the assigned sentiment from the headset to the participant computer; and
transmitting the assigned sentiment from the participant computer to a teleconferencing server.

10. The method of claim 1, further comprising:
transmitting the detected movement of the headset from the headset to the participant computer, wherein the sentiment is assigned to a participant by the participant computer; and
transmitting the assigned sentiment from the participant computer to a teleconferencing server.

11. The method of claim 1, further comprising:
transmitting the detected movement of the headset from the headset to the participant computer and from the participant computer to a teleconferencing server, wherein the sentiment is assigned to a participant by the teleconferencing server.

12. The method of claim 1, wherein displaying the sentiment assigned to at least one of the participants along with the teleconference images on at least one of the participant computers, includes displaying an identification of the at least one participant and a graphical indication of the sentiment assigned to the at least one participant.

13. The method of claim 12, wherein the graphic indication of the sentiment uses a first color or icon to indicate a positive sentiment and a second color or icon to indicate a negative sentiment.

14. The method of claim 1, further comprising:
outputting teleconference audio through a speaker within the headset.

15. A computer program product comprising a non-transitory computer readable storage medium having program instructions embodied therewith, the program instructions executable by a processor to cause the processor to perform a method comprising:
establishing, by a teleconferencing server (30), a network connection with each of a plurality of participant computers (20A, 20B, 20C, 20D, 20E);
sending teleconference images to each of the plurality of participant computers for displaying (71) teleconference images on display screens of each of a plurality of participant computers;
receiving input identifying (72) movement of a plurality of headsets (50), wherein each headset is in direct communication with one of the plurality of participant computers;
assigning (73), for each of the plurality of participant computers, a sentiment to the participant using the participant computer as a function of the headset movement received from each of the plurality of participant computers; and
sending the sentiment assigned to at least one of the participants along with the teleconference images to at least one of the participant computers for display (74) along with the teleconference images, **characterized in that** the sentiment is assigned to at least one of the participant's by a component of the headset that is in direct communication with the at least one of a participant's computer responsive to the movement of the headset that is in direct communication with the at least one of a participant's computer.

16. The computer program product of claim 15, the input identifying movement of a headset is generated by an accelerometer secured to the headset, wherein the accelerometer measures acceleration in multiple directions.

17. The computer program product of claim 15, further comprising:
assigning a positive sentiment to the participant in response to receiving input identifying movement of the headset that is consistent with head nodding of the participant; and
assigning a negative sentiment to the participant in response to receiving input identifying movement of the headset that is consistent with side-to-side head shaking of the participant.

18. The computer program product of claim 17, further comprising:
determining a collective sentiment of all participants as a function of the sentiment assigned to each participant; and
sending the collective sentiment to at least one of the participant computers for display along with the teleconference images.

## Patentansprüche

1. Verfahren, umfassend:
Anzeigen (71) von Telekonferenzbildern auf Anzeigebildschirmen von jedem von einer Mehrzahl von Teilnehmercomputern (20A, 20B, 20C, 20D, 20E) zur Ansicht von Teilnehmern einer Telekonferenz;
Erfassen (72) einer Bewegung eines Kopfhörers (50), der sich in direkter Kommunikation mit dem Teilnehmercomputer befindet, für jeden von der Mehrzahl von Teilnehmercomputern;
Zuweisen (73) einer Gefühlslage zu dem Teilnehmer, der den Teilnehmercomputer verwendet als eine Funktion der erfassten Kopfhörerbewegung für jeden von der Mehrzahl von Teilnehmercomputern; und
Anzeigen (74) der Gefühlslage, die zumindest einem der Teilnehmer zugewiesen ist, zusammen mit den Telekonferenzbildern auf zumindest einem der Teilnehmercomputer;
Einrichten einer Netzwerkverbindung mit einem Telekonferenzserver (30) für jeden von der Mehrzahl von Teilnehmercomputern; und
wobei der Telekonferenzserver die Telekonferenzbilder an jeden von der Mehrzahl von Teilnehmercomputern sendet,
**dadurch gekennzeichnet, dass** die Gefühlslage von einer Komponente des Kopfhörers in Erwiderung auf eine Bewegung des Kopfhörers zugewiesen wird.

2. Verfahren nach Anspruch 1, wobei die Telekonferenzbilder ausgewählt sind aus Grafiken und Livevideo.

3. Verfahren nach Anspruch 1, wobei Bewegung des Kopfhörers von einem Beschleunigungsmesser erfasst wird, der an dem Kopfhörer gesichert ist.

4. Verfahren nach Anspruch 3, wobei der Beschleunigungsmesser Beschleunigung in drei Dimensionen misst.

5. Verfahren nach Anspruch 3, wobei der Beschleunigungsmesser Beschleunigung in mehreren Richtungen misst.

6. Verfahren nach Anspruch 5, weiter umfassend:
Zuweisen einer positiven Gefühlslage zu dem Teilnehmer in Erwiderung auf ein Erfassen einer Bewegung des Kopfhörers, die mit Kopfnicken des Teilnehmers übereinstimmt; und
Zuweisen einer negativen Gefühlslage zu dem Teilnehmer in Erwiderung auf ein Erfassen einer Bewegung des Kopfhörers, die mit Kopfschütteln von Seite zu Seite des Teilnehmers übereinstimmt.

7. Verfahren nach Anspruch 6, weiter umfassend:
Zuweisen einer verwirrten Gefühlslage zu dem Teilnehmer in Erwiderung auf ein Erfassen einer Bewegung des Kopfhörers, die mit einer seitlichen Kopfneigung des Teilnehmers übereinstimmt.

8. Verfahren nach Anspruch 1, weiter umfassend:
Bestimmen einer kollektiven Gefühlslage aller Teilnehmer als eine Funktion der von jedem Teilnehmer erhaltenen Gefühlslage; und
Anzeigen der kollektiven Gefühlslage zusammen mit den Telekonferenzbildern auf zumindest einem der Teilnehmercomputer.

9. Verfahren nach Anspruch 1, weiter umfassend:
Übertragen der zugewiesenen Gefühlslage von dem Kopfhörer and den Teilnehmercomputer;
und
Übertragen der zugewiesenen Gefühlslage von dem Teilnehmercomputer an einen Telekonferenzserver.

10. Verfahren nach Anspruch 1, weiter umfassend:
Übertragen der erfassten Bewegung des Kopfhörers von dem Kopfhörer an den Teilnehmercomputer, wobei die Gefühlslage zu einem Teilnehmer durch den Teilnehmercomputer zugewiesen wird;
und
Übertragen der zugewiesenen Gefühlslage von dem Teilnehmercomputer an einen Telekonferenzserver.

11. Verfahren nach Anspruch 1, weiter umfassend:
Übertragen der erfassten Bewegung des Kopfhörers von dem Kopfhörer an den Teilnehmercomputer und von dem Teilnehmercomputer an einen Telekonferenzserver, wobei die Gefühlslage zu einem Teilnehmer durch den Telekonferenzserver zugewiesen wird.

12. Verfahren nach Anspruch 1, wobei Anzeigen der Gefühlslage, die zumindest einem der Teilnehmer zugewiesen ist, zusammen mit den Telekonferenzbildern auf zumindest einem der Teilnehmercomputer ein Anzeigen einer Identifikation von dem zumindest einen Teilnehmers und einen grafischen Hinweise auf die Gefühlslage, die dem zumindest einen Teilnehmer zugewiesen ist, enthält.

13. Verfahren nach Anspruch 12, wobei der grafische Hinweis auf die Gefühlslage eine erste Farbe oder Bild verwendet, um auf eine positive Gefühlslage hinzuweisen und eine zweite Farbe oder Bild, um auf eine negative Gefühlslage hinzuweisen.

14. Verfahren nach Anspruch 1, weiter umfassend:
Ausgeben von Telekonferenzaudio durch einen Lautsprecher innerhalb des Kopfhörers.

15. Computerprogrammprodukt, umfassend ein nichtflüchtiges, computerlesbares Speichermedium, das Programminstruktionen darin verkörpert hat, wobei die Programminstruktionen von einem Prozessor ausführbar sind, um den Prozessor zu veranlassen ein Verfahren durchzuführen, umfassend:
Einrichten einer Netzwerkverbindung mit jedem von einer Mehrzahl von Teilnehmercomputern (20A, 20B, 20C, 20D, 20E) durch einem Telekonferenzserver (30);
Senden von Telekonferenzbildern an jeden von der Mehrzahl von Teilnehmercomputern zum Anzeigen (71) von Telekonferenzbildern auf Anzeigebildschirmen von jedem von einer Mehrzahl von Teilnehmercomputern;
Empfangen einer Eingabe, die eine Bewegung von einer Mehrzahl von Kopfhörern (50) identifiziert (72), wobei sich jeder Kopfhörer in direkter Kommunikation mit einem von der Mehrzahl von Teilnehmercomputern befindet;
Zuweisen (73) einer Gefühlslage zu dem Teilnehmer, der den Teilnehmercomputer verwendet als eine Funktion der Kopfhörerbewegung, die von jedem von der Mehrzahl von Teilnehmercomputern empfangen wurde;
und
Senden der Gefühlslage, die zumindest einem der Teilnehmer zugewiesen ist, zusammen mit den Telekonferenzbildern an zumindest einen der Teilnehmercomputer zum Anzeigen (74) zusammen mit den Telekonferenzbildern,
**dadurch gekennzeichnet, dass** die Gefühlslage zu zumindest einem von den Teilnehmern von einer Komponente des Kopfhörers, die sich in direkter Kommunikation mit dem zumindest einen Computer eines Teilnehmers befindet, in Erwiderung auf die Bewegung des Kopfhörers, der sich in direkter Kommunikation mit dem zumindest einen Computer eines Teilnehmers befindet.

16. Computerprogrammprodukt nach Anspruch 15, wobei die Eingabe, die eine Bewegung eines Kopfhörers identifiziert durch einen Beschleunigungsmesser erzeugt wird, der an dem Kopfhörer gesichert ist, wobei der Beschleunigungsmesser Beschleunigung in mehreren Richtungen misst.

17. Computerprogrammprodukt nach Anspruch 15, weiter umfassend:
Zuweisen einer positiven Gefühlslage zu dem Teilnehmer in Erwiderung auf ein Empfangen einer Eingabe, die eine Bewegung des Kopfhörers identifiziert, die mit Kopfnicken des Teilnehmers übereinstimmt; und
Zuweisen einer negativen Gefühlslage zu dem Teilnehmer in Erwiderung auf ein Empfangen einer Eingabe, die eine Bewegung des Kopfhörers identifiziert, die mit Kopfschütteln von Seite zu Seite des Teilnehmers übereinstimmt.

18. Computerprogrammprodukt nach Anspruch 15, weiter umfassend:
Bestimmen einer kollektiven Gefühlslage aller Teilnehmer als eine Funktion der Gefühlslage, die jedem Teilnehmer zugewiesen ist; und
Senden der kollektiven Gefühlslage an zumindest einen der Teilnehmercomputer zum Anzeigen zusammen mit den Telekonferenzbildern.

## Revendications

1. Procédé, consistant à :
afficher (71) des images de téléconférence sur des écrans d'affichage de chaque ordinateur participant de la pluralité d'ordinateurs participants (20A, 20B, 20C, 20D, 20E) destinés à être visualisées par les participants durant une téléconférence ;
détecter (72)
pour chaque ordinateur participant de la pluralité d'ordinateurs participants, un mouvement d'un casque (50) qui est en communication directe avec l'ordinateur participant ;
attribuer (73),
pour chaque ordinateur participant de la pluralité d'ordinateurs participants, un sentiment au participant se servant de l'ordinateur participant en fonction du mouvement de casque détecté ; et
afficher (74)
le sentiment attribué à au moins l'un des participants avec les images de téléconférence sur au moins l'un des ordinateurs participants ;
établir, pour chaque ordinateur participant de la pluralité des ordinateurs participants, une connexion réseau avec un serveur de téléconférence (30) ; et
le serveur de téléconférence envoyant les images de téléconférence à chaque ordinateur participant, **caractérisé en ce que** le sentiment est attribué par un composant du casque en réponse au mouvement du casque.

2. Procédé selon la revendication 1, les images de téléconférence étant sélectionnées parmi des graphiques et des vidéos en direct.

3. Procédé selon la revendication 1, le mouvement du casque étant détecté par un accéléromètre fixé au casque.

4. Procédé selon la revendication 3,
l'accéléromètre mesurant l'accélération en trois dimensions.

5. Procédé selon la revendication 3,
l'accéléromètre mesurant l'accélération dans plusieurs directions.

6. Procédé selon la revendication 5, consistant en outre à :
attribuer un sentiment positif au participant en réponse à la détection du mouvement du casque qui est cohérent avec le hochement de tête du participant ; et
attribuer un sentiment négatif au participant en réponse à la détection du mouvement du casque qui est cohérent avec le mouvement de gauche à droite de la tête du participant.

7. Procédé selon la revendication 6, consistant en outre à :
attribuer un sentiment de confusion au participant en réponse à la détection du mouvement du casque qui est cohérent avec une inclinaison latérale de la tête du participant.

8. Procédé selon la revendication 1, consistant en outre à :
déterminer un sentiment collectif de tous les participants en fonction du sentiment reçu en provenant de chaque participant ; et
afficher le sentiment collectif avec les images de téléconférence sur au moins l'un des ordinateurs participants.

9. Procédé selon la revendication 1, consistant en outre à :
transmettre le sentiment attribué à partir du casque à l'ordinateur participant ;
et
transmettre le sentiment attribué en provenant de l'ordinateur participant à un serveur de téléconférence.

10. Procédé selon la revendication 1, consistant en outre à :
transmettre le mouvement détecté du casque provenant du casque à l'ordinateur participant, le sentiment étant attribué à un participant par l'ordinateur participant ; et
transmettre le sentiment attribué provenant du participant à un serveur de téléconférence.

11. Procédé selon la revendication 1, consistant en outre à :
transmettre le mouvement détecté du casque provenant du casque à l'ordinateur participant et provenant de l'ordinateur participant au serveur de téléconférence, le sentiment étant attribué au participant par le serveur de téléconférence.

12. Procédé selon la revendication 1, l'affichage du sentiment attribué aux participants avec les images de téléconférence sur au moins l'un des ordinateurs participants, consistant à afficher une identification du participant et/ou une indication graphique du sentiment attribué audit participant.

13. Procédé selon la revendication 12, l'indication graphique du sentiment utilisant une première couleur ou icône pour indiquer un sentiment positif et une seconde couleur ou icône pour indiquer un sentiment négatif.

14. Procédé selon la revendication 1, consistant en outre à :
émettre une audio de téléconférence par l'intermédiaire d'un haut-parleur dans le casque.

15. Produit programme d'ordinateur comprenant un support d'enregistrement lisible par ordinateur non transitoire ayant des instructions de programme intégrées en son sein, les instructions de programme pouvant être exécutées par un processeur pour amener le processeur à exécuter un procédé consistant à :
établir, par un serveur de téléconférence (30), une connexion réseau avec chaque ordinateur participant de la pluralité des ordinateurs participants (20A, 20B, 20C, 20D, 20E) ;
envoyer les images de téléconférence à chaque ordinateur participant de la pluralité d'ordinateurs participants pour afficher (71)
des images de téléconférence sur des écran d'affichage de chaque ordinateur participant de la pluralité d'ordinateurs participants ;
recevoir l'identification d'entrée (72) de mouvement d'une pluralité de casques (50), chaque casque étant en communication directe avec un ordinateur participant de la pluralité d'ordinateurs participants ;
attribuer (73),
pour chaque ordinateur participant de la pluralité d'ordinateurs participants, un sentiment au participant se servant de l'ordinateur participant en fonction du mouvement de casque reçu en provenance de chaque ordinateur participant de la pluralité d'ordinateurs participants ; et
envoyer le sentiment attribué à au moins l'un des participants avec les images de téléconférence à au moins l'un des ordinateurs participants pour afficher (74) avec les images de téléconférence, **caractérisé en ce que** le sentiment est attribué à au moins l'un des participants par un composant du casque qui est en communication directe avec ledit ordinateur participant en réponse au mouvement du casque qui est en communication directe avec ledit ordinateur participant.

16. Produit programme d'ordinateur selon la revendication 15, le mouvement d'identification d'entrée d'un casque étant produit par un accéléromètre fixé au casque, l'accéléromètre mesurant l'accélération dans plusieurs directions.

17. Produit programme d'ordinateur selon la revendication 15, consistant en outre à :
attribuer un sentiment positif au participant en réponse à la réception du mouvement d'identification d'entrée du casque qui est cohérent avec le hochement de tête du participant ; et
attribuer un sentiment négatif au participant en réponse à la réception du mouvement d'identification d'entrée du casque qui est cohérent avec le mouvement latéral de la tête du participant.

18. Produit programme d'ordinateur selon la revendication 17, consistant en outre à :
déterminer un sentiment collectif de tous les participants en fonction du sentiment attribué à chaque participant ; et
envoyer le sentiment collectif à au moins l'un des ordinateurs participants servant à afficher avec les images de téléconférence.
